Europäisches Patentamt

European Patent Office

Office européen des brevets

(19)

(11) Veröffentlichungsnummer: **0 113 118**
**B1**

(12) ## EUROPÄISCHE PATENTSCHRIFT

(45) Veröffentlichungstag der Patentschrift:
08.02.89

(51) Int. Cl.⁴: **G 01 N 21/03**

(21) Anmeldenummer: **83113171.9**

(22) Anmeldetag: **28.12.83**

(54) Küvette zur Durchführung einer photometrischen Messung.

(30) Priorität: **29.12.82 CH 7611/82**

(43) Veröffentlichungstag der Anmeldung:
**11.07.84 Patentblatt 84/28**

(45) Bekanntmachung des Hinweises auf die Patenterteilung:
**08.02.89 Patentblatt 89/6**

(84) Benannte Vertragsstaaten:
**AT BE CH DE FR GB IT LI NL**

(56) Entgegenhaltungen:
**DE-A- 2 049 522**
**DE-A- 2 810 117**
**US-A- 4 357 301**

(73) Patentinhaber: **F. HOFFMANN-LA ROCHE & CO.**
**Aktiengesellschaft, CH-4002 Basel (CH)**

(72) Erfinder: **Borer, Claude, 6 b Ronystrasse,**
**CH-6331 Hünenberg (CH)**
Erfinder: **Schildknecht, Kurt, 35 St. Wolfgangstrasse,**
**CH-6331 Hünenberg (CH)**

(74) Vertreter: **Körber, Wolfhart, Dr. et al, Patentanwälte**
**Dipl.-Ing. H. Mitscherlich Dipl.-Ing. K. Gunschmann**
**Dr.rer.nat. W. Körber Dipl.Ing. J. Schmidt-Evers Dipl.-Ing.**
**W. Melzer Steinsdorfstrasse 10,**
**D-8000 München 22 (DE)**

**Beschreibung**

Die Erfindung betrifft eine Vorrichtung zur photometrischen Untersuchung einer flüssigen Probe, welche Vorrichtung folgende Teile enthält:

eine unbewegliche Lichtquelle zur Erzeugung eines Lichtstrahls für die photometrische. Messung, eine Küvette zur Aufnahme der Probe, welche Küvette einen länglichen Innenraum mit einer Längsachse und mindestens eine flache, den Innenraum begrenzende optisch durchlässige und vom Lichtstrahl zu durchlaufende Wand aufweist, und einen drehbaren Küvettenhalter, an dem eine oder mehrere Küvetten angeordnet und entlang eines kreisförmigen Weges bewegbar sind.

Bei der photometrischen Messung der Lichtabsorption einer flüssigen Probe, die in einer Küvette enthalten ist, wird der von einer Küvette ausgehende Lichtstrahl mit Hilfe einer Fotozelle gemessen. Im Messbereich dieser Fotozelle ist die von ihr abgegebene Spannung annähernd eine lineare Funktion der Intensität des auf die Fotozelle einfallenden Lichtes. Der Messbereich der Zelle ist jedoch begrenzt und sehr viel geringer als die mögliche Variationsbreite der Lichtabsorption. Dem wird Rechnung getragen, indem Messungen mit verschiedenen Schichtdicken durchgeführt werden, wobei eine grössere oder eine geringere Schichtdicke gewählt wird, je nachdem, ob die Absorptionsfähigkeit der Probe kleiner oder grösser ist. Zur Durchführung solcher Messungen ist es bekannt (deutsche Offenlegungsschrift DE-A-2 810 117), eine längliche Küvette in senkrechter Lage zu verwenden, die über ihre Länge verteilt Bereiche mit unterschiedlichem lichten Querschnitt und unterschiedlicher Dicke der Küvettenwand aufweist, wobei sich der lichte Querschnitt und die Wanddicke stufenweise ändern. Bei dieser bekannten Vorrichtung wird die Küvette angehoben bzw. gesenkt, um den Bereich der jeweils gewünschten Schichtdicke in den Strahlengang zwischen Lichtquelle und Fotozelle zu bringen.

Da bei der bekannten Vorrichtung einzelne Küvetten angehoben bzw. gesenkt werden müssen, um die gemessene Schichtdicke zu ändern, ist diese Vorrichtung nicht dazu geeignet rasche Analysen von Proben in einer Vielzahl von Küvetten zu ermöglichen. Die Form der bekannten Küvette erfordert ausserdem ein relativ grosses Volumen der Probe. Da in den verschiedenen Bereichen der bekannten Küvette die Dicke der Küvettenwand und somit die dadurch verursachte Lichtabsorption unterschiedlich ist, muss man diesen Umstand bei der Ermittlung des Messergebnisses berücksichtigen, was natürlich eine zusätzliche Komplikation mit sich bringt.

Rotatorische Photometer der eingangs genannten Art, bei denen die Messküvetten entlang eines kreisförmigen Weges bewegt werden, sind an sich bekannt (US-A-4 357 301 und DE-A-2 049 522). Damit wird jedoch nur eine bestimmte Schichtdicke der Proben gemessen.

Ebenfalls an sich bekannt (DE-A-2 049 522), ist die radiale Anordnung der Küvetten in rotatorischen Photometern.

Der vorliegenden Erfindung liegt die Aufgabe zugrunde, eine Vorrichtung der eingangs genannten Art zu schaffen, dem die oben erwähnte Beschränkung in der Anwendung und die oben erwähnten Nachteile nicht anhaften, das also vor allem rasche Analysen von Proben in einer Vielzahl von Küvetten, mit geringen Probenmengen, und auf möglichst einfache Weise ermöglicht.

Diese Aufgabe wird erfindungsgemäss mit einer Vorrichtung gelöst, welche dadurch gekennzeichnet ist, dass der Innenraum der Küvette an einem seiner Enden und über seine Breite verteilt wenigstens zwei nebeneinanderliegende Bereiche mit unterschiedlichem lichten Querschnitt aufweist, wobei der lichte Querschnitt sich von einem Bereich zum nächsten stufenweise ändert, und die Wand in beiden Bereichen die gleiche Dicke aufweist, und die Küvette quer zur Richtung des Lichtstrahles so bewegbar ist, dass während der Bewegung der Küvette wenigstens zwei der Bereiche vom Lichtstrahl nacheinander durchlaufen werden.

Die durch diese Vorrichtung erzielten Vorteile sind im wesentlichen darin zu sehen, dass es mit relativ geringem Aufwand rasche Analysen von Proben in einer Vielzahl von Küvetten mit verschiedenen Schichtdicken ermöglicht. Ausserdem ist bei der photometrischen Messung die durch die Küvettenwänden verursachte Lichtabsorption in allen Bereichen der Küvette gleich. Dies vereinfacht die Ermittlung der Messergebnisse.

Eine bevorzugte Ausführungsform der erfindungsgemässen Vorrichtung ist dadurch gekennzeichnet, dass der Lichtstrahl in einer waagrechten Ebene verläuft, dass die Längsachse des Innenraumes jeder Küvette senkrecht zu dieser Ebene gerichtet ist, und dass jeder Bereich sich zwischen zwei flachen, optisch durchlässigen, zueinander parallel liegenden Wänden der Küvette erstreckt, wobei der Abstand zwischen den Innenseiten dieser Wände die untersuchte Schichtdicke der Probe definiert, wobei alle Bereiche sich zwischen Wänden erstrecken, die die gleiche Dicke haben.

Eine zweite Ausführungsform der erfindungsgemässen Vorrichtung sieht vor, dass während der Bewegung der Küvette die Längsachse ihres Innenraums sich in einer waagrechten Ebene befindet, dass der Lichtstrahl senkrecht zu dieser Ebene verläuft, und dass jeder Bereich sich zwischen zwei flachen, optisch durchlässigen, zueinander parallel liegenden Wänden der Küvette erstreckt, wobei der Abstand zwischen den Innenseiten dieser Wände die untersuchte Schichtdicke der Probe definiert, wobei alle Bereiche sich zwischen Wänden erstrecken, die die gleiche Dicke haben.

Eine dritte Ausführungsform der erfindungsgemässen Vorrichtung ist dadurch gekennzeichnet, dass während der Bewegung der Küvette ihre Längsachse sich in einer waagrechten Ebene befindet, dass der Lichtstrahl in dieser Ebene oder in einer dazu parallelen Ebene verläuft, die Wand stufenförmig ausgebildet ist, und dass die Bereiche der Küvette sich zwischen der Oberfläche der Probe in der Küvette und der Wand der Küvette erstrecken. Diese Ausführungsform hat den Vorteil, dass sie in jedem Bereich Messungen mit variabler Schichtdicke ermöglicht, d.h. mit einer Schichtdicke, die nicht ausschliesslich durch die Abmessungen der Küvette sondern auch durch die Probenmenge bestimmt ist.

Weitere Merkmale, Vorteile und Anwendungsmöglichkeiten der Erfindung gehen aus der folgenden, anhand der beiliegenden Zeichnungen vorgenommenen Beschreibung von Ausführungsbeispielen hervor. Es zeigt

Fig. 1 eine schematische, perspektivische Ansicht einer Küvette, die in einer erfindungsgemässen Messeinrichtung verwendet wird.

Fig. 2 eine schematische Draufsicht einer erfindungsgemässen Messeinrichtung mit einer kreisförmigen Anordnung von Küvetten der in Fig. 1 gezeigten Art,

Fig. 3 eine schematische, perspektivische Ansicht einer Variante der Messeinrichtung gemäss Fig. 2,

Fig. 4 eine schematische, perspektivische Ansicht einer Variante der in Fig. 3 gezeigten Messeinrichtung.

Beispiel 1

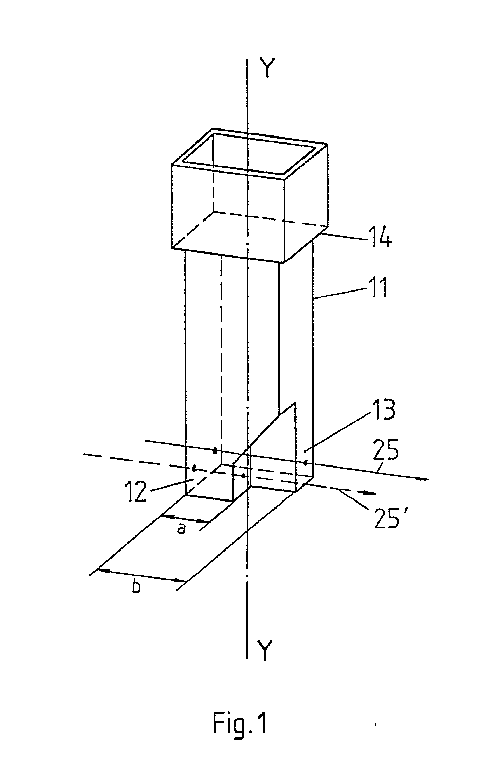

Fig. 1 zeigt eine zur Durchführung des erfindungsgemässen Verfahrens geeignete Küvette 11. Diese besitzt einen länglichen Innenraum und eine Längsachse Y–Y. An einem Ende hat der Innenraum der Küvette über ihre Breite verteilt, zwei nebeneinander liegenden, zur Durchführung der photometrischen Messung einer in der Küvette enthaltenen flüssigen Probe geeigneten Bereiche 12 und 13 mit unterschiedlichem lichten Querschnitt. Erfindungsgemäss kann die Küvette auch mehr als zwei solche Bereiche haben. Jeder der Bereiche 12, 13 erstreckt sich zwischen zwei flachen, optisch durchlässigen, parallel zueinander liegenden Wänden der Küvette, wobei der Abstand a bzw. b zwischen den Innenseiten dieser Wände die untersuchte Schichtdicke der Probe definiert, die in dem Bereich untersucht wird. Dieser Abstand ändert sich stufenweise von einem Bereich zum nächsten. Nebeneinander liegende Bereiche ermöglichen also unterschiedliche Schichtdicken der Probe zu untersuchen. Alle Bereiche erstrecken sich zwischen Wänden, die die gleiche Dicke haben.

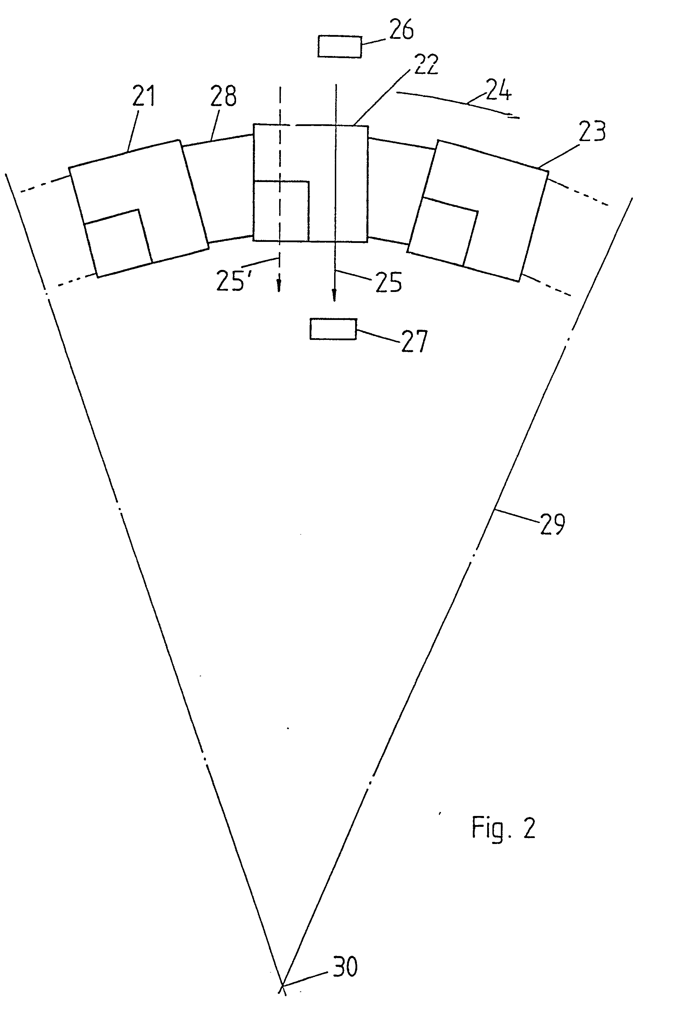

Die oben beschriebene Küvette kann einzeln oder in Gruppen verwendet werden. Wie in der Fig. 2 durch eine schematische Draufsicht gezeigt, ist im letzten Fall vorteilhaft, Verbindungsstücke 28 vorzusehen, die benachbarten Küvetten verbinden, indem sie z.B. mit den Küvetten verschweisst sind. Auf diese Weise können selbsttragende Küvettengruppen gebildet werden. Durch geeignete Ausbildung der Verbindungsstücke können Küvettengruppen gebildet werden, die zusammen z.B. eine kreisförmige Küvettenanordnung bilden können. Fig. 2 zeigt eine schematische Draufsicht einer solchen Küvettengruppe.

Die Küvetten und die Verbindungsstücke werden vorzugsweise aus glasklarem, unstabilisiertem Polymethylmethakrylat (PMMA) hergestellt.

Sie können aber auch ganz oder teilweise aus Glas bestehen.

Zur Durchführung des erfindungsgemässen Verfahrens wird die flüssige Probe in eine der oben beschriebenen Küvetten eingeführt. Diese Küvetten sind einzeln, oder wie in Fig. 2 gezeigt, als Teil einer Küvettengruppe auf einem Küvettenträger 29 angeordnet, der z.B. eine kreisförmige Platte ist, die eine kreisförmige Anordnung von (in Fig. 2 nicht gezeigten) Öffnungen hat, in die die Küvetten eingesetzt werden. Die Küvetten werden in diesen Öffnungen z.B. durch einen oberen in Fig. 1 gezeigten Küvettenrand 14 gehalten.

Wie in Fig. 2 gezeigt, wird für die photometrische Messung ein Lichtstrahl 25 verwendet, der mit einer unbeweglichen Lichtquelle 26 erzeugt wird. Der von einer Küvette ausgehende Lichtstrahl wird von einem Lichtempfänger 27 empfangen, der ein entsprechendes elektrisches Signal erzeugt. Der Lichtstrahl verläuft in einer waagrechten Ebene und die Längsachse jeder Küvette ist senkrecht zu dieser Ebene gerichtet.

Wie aus Fig. 1 ersichtlich, liegt der Strahlengang vorzugsweise annähernd auf halber Höhe der Bereiche 12, 13 jeder Küvette 11.

Durch Zentrifugierung des Küvettenträgers 29 um seine Rotationsachse 30 in der mit dem Pfeil 24 gezeigten Richtung wird jede Küvette, wie z.B. die Küvette 21 in Fig. 2, entlang eines Kreises in einer zur Längsachse Y–Y der Küvette senkrechten Ebene kontinuierlich bewegt. Dadurch wird erreicht, dass der Lichtstrahl 25 schnell alle Bereiche der Küvette einen nach dem anderen und dabei unterschiedliche Schichtdicken der Probe durchläuft. In Fig. 1 und 2 wird mit der gestrichelten Linie und Pfeil 25′ die Stelle des Bereiches 12 markiert, die der Lichtstrahl 25 durchläuft, wenn diese Stelle sich zwischen der Lichtquelle 26 und dem Lichtempfänger 27 befindet.

Beispiel 2

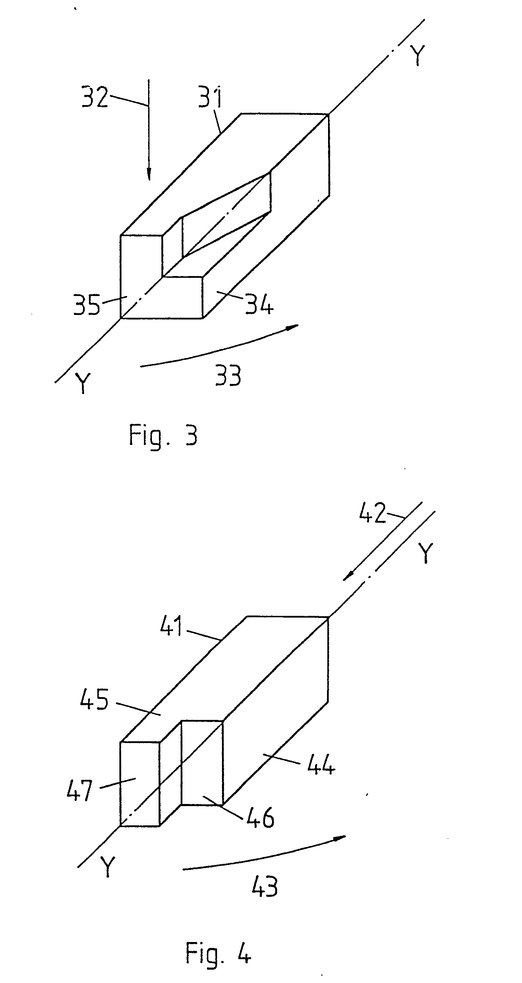

Eine Variante des in Beispiel 1 beschriebenen Verfahrens wird nun anhand der Fig. 3 beschrieben. Es ist bei dieser Variante vorgesehen, dass eine Küvette 31 mit ähnlichen Bereichen 34, 35 wie die Küvette 11 in Fig. 1, zusätzlich eine oder mehrere (in der Fig. 3 nicht gezeigten) Kammer enthält, die die flüssige Probe oder ihre Komponenten halten, solange sich die Küvette im Stillstand befindet, und dass die Probe oder ihre Komponenten bei Zentrifugierung des Küvettenträgers in die Bereiche 34, 35 der Küvette gelangen, die zur Durchführung der photometrischen Messungen vorgesehen sind.

Während der Bewegung der Küvette 31 durch Zentrifugierung des Küvettenträgers befindet sich die Längsachse Y–Y der Küvette in einer waagrechten Ebene. Ein Lichtstrahl 32, der für die photometrische Messung durch die Bereiche 34, 35 vorgesehen ist, verläuft senkrecht zur letztgenannten Ebene. Die Küvette wird in die mit dem Pfeil 33 gezeigten Richtung bewegt.

Eine Voraussetzung zur Durchführung einer korrekten Messung mit dieser Variante des Verfahrens ist, dass der Küvettenträger mit einer genügend hohen Drehgeschwindigkeit zentrifugiert wird, so dass die dadurch entwickelte Zentrifugalkraft die flüssige Probe in den Bereichen 34, 35 der Küvette hält. Eine weitere Voraussetzung ist selbstverständlich, dass dabei die Bereiche 34, 35 eine genügende Menge der Probe enthalten, so dass in beiden Bereichen der Lichtstrahl 32 die Probe durchläuft.

## Beispiel 3

Eine Variante des im Beispiel 2 beschriebenen Verfahrens wird mit einer Küvette 41 durchgeführt, die eine andere Form hat. Wie in Fig. 4 gezeigt, sind an einem Ende der Küvette Bereiche 44, 45 für die photometrische Messung vorgesehen, die über die Länge der Küvette verteilt, unterschiedlich lichte Querschnitte haben, wobei der lichte Querschnitt sich stufenweise von einem Bereich zum nächsten ändert. Die Küvette kann mehr als zwei solche Bereiche haben.

Während der Bewegung der Küvette 41 durch Zentrifugierung des Küvettenträgers befindet sich die Längsachse der Küvette – wie im Beispiel 2 – in einer waagrechten Ebene. Ein Lichtstrahl 42, der für die photometrische Messung durch die Bereiche 44, 45 vorgesehen ist, verläuft in dieser Ebene oder in einer dazu parallelen Ebene.

In diesem Beispiel erstreckt sich jeder Bereich 44 bzw. 45 zwischen der Innenseite einer Küvettenwand 46 bzw. 47 und der freien Oberfläche der in der Küvette enthaltenen flüssigen Probe. Diese Variante ermöglicht also, durch Wahl des Probevolumens Messungen mit variabler Schichtdicke durchzuführen.

## Patentansprüche

1. Vorrichtung zur photometrischen Untersuchung einer flüssigen Probe, welche Vorrichtung folgende Teile enthält:

eine unbewegliche Lichtquelle (26) zur Erzeugung eines Lichtstrahles (25, 32, 42) für die photometrische Messung, eine Küvette (11; 31; 41) zur Aufnahme der Probe, welche Küvette einen länglichen Innenraum mit einer Längsachse (Y–Y) und mindestens eine flache, den Innenraum begrenzende optisch durchlässige und vom Lichtstrahl zu durchlaufende Wand (46, 47) aufweist, und einen drehbaren Küvettenhalter (29), an dem eine oder mehrere Küvetten angeordnet und entlang eines kreisförmigen Weges bewegbar sind, dadurch gekennzeichnet, dass der Innenraum der Küvette an einem seiner Enden und über seine Breite verteilt wenigstens zwei nebeneinanderliegende Bereiche (12, 13; 34, 35; 44, 45) mit unterschiedlichem lichten Querschnitt aufweist, wobei der lichte Querschnitt sich von einem Bereich zum nächsten stufenweise ändert, und die Wand in beiden Bereichen die gleiche Dicke aufweist, und die Küvette quer zur Richtung des Lichtstrahles so bewegbar ist, dass während der Bewegung der Küvette wenigstens zwei der Bereiche vom Lichtstrahl nacheinander durchlaufen werden.

2. Vorrichtung nach Anspruch 1, dadurch gekennzeichnet, dass der Lichtstrahl (25) in einer waagrechten Ebene verläuft, dass die Längsachse des Innenraums jeder Küvette (11) senkrecht zu dieser Ebene gerichtet ist, und dass jeder Bereich sich zwischen zwei flachen, optisch durchlässigen, zueinander parallel liegenden Wänden der Küvette erstreckt, wobei der Abstand zwischen den Innenseiten dieser Wände die untersuchte Schichtdicke der Proben definiert, wobei alle Bereiche sich zwischen Wänden erstrecken, die die gleiche Dicke haben.

3. Vorrichtung nach Anspruch 1, dadurch gekennzeichnet, dass während der Bewegung der Küvette (31) die Längsachse ihres Innenraums sich in einer waagrechten Ebene befindet, dass der Lichtstrahl (32) senkrecht zu dieser Ebene verläuft, und dass jeder Bereich sich zwischen zwei flachen, optisch durchlässigen, zueinander parallel liegenden Wänden der Küvette erstreckt, wobei der Abstand zwischen den Innenseiten dieser Wände die untersuchte Schichtdicke der Probe definiert, wobei alle Bereiche sich zwischen Wänden erstrecken, die die gleiche Dicke haben.

4. Vorrichtung nach Anspruch 1, dadurch gekennzeichnet, dass während der Bewegung der Küvette (41) die Längsachse ihres Innenraums sich in einer waagrechten Ebene befindet, dass der Lichtstrahl (42) in dieser Ebene oder in einer dazu parallelen Ebene verläuft, die Wand stufenförmig ausgebildet ist, und dass die Bereiche (44, 45) der Küvette (41) sich zwischen der Oberfläche der Probe in der Küvette und der Wand (46, 47) der Küvette erstrecken.

## Claims

1. An apparatus for the photometric examination of a liquid specimen or sample, the apparatus comprising the following parts:

A stationary light source (26) for the photometric measurement; a dish (11; 31; 41) adapted to receive the sample and having an elongated inner chamber with a longitudinal axis (Y–Y) and at least one flat optically permeable wall (46, 47). which bounds the inner chamber and through which the light beam passes; and a rotatable dish holder (29) on which one or more dishes are disposed for movement along a circular path, characterized in that the dish interior has at one of its ends and distributed over its width at least two adjacent zones (12, 13; 34, 35; 44, 45) of different internal cross-sections, the internal cross-section varying stepwise from one zone to the adjacent zone; the wall is of the same thickness in both zones and the dish is so movable transversely to the direction of the light beam that at least two of the zones are passed through seriatim by the light beam during the movement of the dish.

2. An apparatus according to claim 1, characterized in that the light beam (25) extends in a horizontal plane, the longitudinal axis of the inner chamber of each dish (11) extends perpendicularly to the latter plane, and each zone extends between two flat optically permeable parallel walls of the dish, the distance between the insides of the latter walls defining the examined layer thickness of the specimen, all the zones extending between walls of the same thickness.

3. An apparatus according to claim 1, characterized in that during the movement of the dish (31) the longitudinal axis of its inner chamber extends in a horizontal plane, the light beam (32) extends parallel to the latter plane, and each zone extends between two flat optically permeable parallel walls of the dish, the distance between the insides of the latter walls defining the examined layer thickness of the specimen, all the zones extending between walls of the same thickness.

4. An apparatus according to claim 1, characterized in that during the movement of the dish (41) the longitudinal axis of its inner chamber extends in a horizontal plane, the light beam (42) extends in the latter plane or in a plane parallel thereto, the wall is stepped, and the zones (44, 45) of the dish (41) extend between the surface of the specimen in the dish and the wall (46, 47) thereof.

**Revendications**

1. Dispositif pour réaliser l'étude photométrique d'un échantillon liquide, lequel dispositif contient les éléments suivants:

une source de lumière immobile (26) servant à produire un faisceau de lumière (25, 32, 42) pour la mesure photométrique, une cuvette (11; 31; 41) servant à recevoir l'échantillon, laquelle cuvette possède un espace intérieur allongé comportant un axe longitudinal (Y–Y) et au moins une paroi plane (46, 47), qui limite l'espace intérieur, est transparente du point de vue optique et doit être traversée par le faisceau de lumière, et un porte-cuvettes rotatif (29), sur lequel une ou plusieurs cuvettes sont disposées et sont déplaçables le long d'un trajet circulaire, caractérisé en ce que l'espace intérieur de la cuvette comporte, au niveau de l'une de ses extrémités, au moins deux zones (12, 13; 34, 35; 44, 45) disposées côte-à-côte en étant réparties sur la largeur de l'espace intérieur et possédant des sections transversales différentes, la section transversale variant de façon discontinue d'une zone à la suivante, que la paroi dans les deux zones possède la même épaisseur et que la cuvette est déplaçable transversalement par rapport à la direction du faisceau de lumière de telle sorte que, pendant son déplacement, au moins deux des zones sont traversées successivement par le faisceau de lumière.

2. Dispositif selon la revendication 1, caractérisé en ce que le faisceau de lumière (25) se déplace dans un plan horizontal, que l'axe longitudinal de l'espace intérieur de chaque cuvette (11) est orienté perpendiculairement à ce plan et que chaque zone s'étend entre deux parois planes de la cuvette, parallèles entre elles et transparentes du point de vue optique, la distance entre les faces intérieures de ces parois définissant l'épaisseur examinée de couche de l'échantillon, toutes les zones s'étendant entre des parois possédant la même épaisseur.

3. Dispositif selon la revendication 1, caractérisé en ce que pendant le déplacement de la cuvette (31), l'axe longitudinal de son espace intérieur est situé dans un plan horizontal, que le faisceau de lumière (32) est perpendiculaire à ce plan et que chaque zone s'étend entre deux parois de la cuvette planes parallèles entre elles et transparentes du point de vue optique, la distance entre les faces intérieures de ces parois définissant l'épaisseur examinée de couche de l'échantillon, toutes les zones s'étendant entre des parois possédant la même épaisseur.

4. Dispositif selon la revendication 1, caractérisé en ce que pendant le déplacement de la cuvette (41), l'axe longitudinal de son espace intérieur est situé dans un plan horizontal, que le faisceau de lumière (42) s'étend dans ce plan ou dans un plan qui est parallèle à ce dernier, que la paroi est réalisée avec une forme étagée et que les zones (44, 45) de la cuvette (41) s'étendent entre la surface de l'échantillon dans la cuvette et la paroi (46, 47) de la cuvette.

Fig.1

7.

Fig. 2

32 31
Y
35 34
Y
33

Fig. 3

42
Y
41
45 44
47 46
Y
43

Fig. 4